(19) Europäisches Patentamt
European Patent Office
Office européen des brevets

(11) **EP 2 779 091 B1**

(12) **EUROPEAN PATENT SPECIFICATION**

(45) Date of publication and mention
of the grant of the patent:
**19.08.2015 Bulletin 2015/34**

(51) Int Cl.:
**G06T 7/00** (2006.01)

(21) Application number: **13305292.8**

(22) Date of filing: **14.03.2013**

(54) **Automatic stereoscopic camera calibration**

Automatische Kalibrierung einer stereoskopischen Kamera

Étalonnage de caméra stéréoscopique automatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.09.2014 Bulletin 2014/38**

(73) Proprietor: **ST-Ericsson SA**
**1228 Plan-les-Ouates (CH)**

(72) Inventor: **Drouot, Antoine**
**75017 PARIS (FR)**

(74) Representative: **Cabinet Plasseraud**
**52, rue de la Victoire**
**75440 Paris Cedex 09 (FR)**

(56) References cited:
- CHRISTIAN KURZ ET AL: "Bundle Adjustment for Stereoscopic 3D", 1 January 2011 (2011-01-01), COMPUTER VISION/COMPUTER GRAPHICS COLLABORATION TECHNIQUES, SPRINGER BERLIN HEIDELBERG, BERLIN, HEIDELBERG, PAGE(S) 1 - 12, XP019167697, ISBN: 978-3-642-24135-2 * abstract * * page 2, lines 5-7 * * page 4, lines 1-20 *
- MAURICIO HESS-FLORES ET AL: "Ray Divergence-Based Bundle Adjustment Conditioning for Multi-view Stereo", 1 January 2012 (2012-01-01), ADVANCES IN IMAGE AND VIDEO TECHNOLOGY, SPRINGER BERLIN HEIDELBERG, BERLIN, HEIDELBERG, PAGE(S) 153 - 164, XP019170127, ISBN: 978-3-642-25366-9 * section "2.1 Two-View Ray Divergence Calculation" * * page 157, lines 5-29 *
- BENJAMIN ALBOUY ET AL: "Accurate 3D Structure Measurements from Two Uncalibrated Views", 1 January 2006 (2006-01-01), ADVANCED CONCEPTS FOR INTELLIGENT VISION SYSTEMS LECTURE NOTES IN COMPUTER SCIENCE;;LNCS, SPRINGER, BERLIN, DE, PAGE(S) 1111 - 1121, XP019043323, ISBN: 978-3-540-44630-9 * abstract; figure 1 *

**Description**

**Technical Field**

The present disclosure relates generally to stereoscopic cameras, and more specifically to a method and apparatus for calibrating such cameras.

**Background Art**

Stereoscopic vision has seen a surge of attention since the adoption of 3D technology for many applications (e.g. automotive driver assistance video games, sport performance analysis and surgery monitoring) and the arrival in the market of stereoscopic displays on smartphones, console games, PCs and TVs. Stereoscopic displays simultaneously show two views of the same scene at each moment in time and may require special 3D glasses to filter the corresponding view for the left and right eye of the viewer. Stereoscopic vision involves the use of two cameras which are separated by a given distance to record one or more images of the same scene, thereinafter referred to as stereo-images and wherein each stereo-image comprises a plurality of image-points.

Camera calibration is the operation of identifying the relationship between one or more image-points from stereo-images to corresponding real world 3D object-points coordinates defining an object in the real world. Then, once this relationship is established, 3D information can be inferred from 2D information, and, vice versa, 2D information can be inferred from 3D information. Camera calibration may also be need for image rectification which allows efficient depth estimation and/or comfortable stereo viewing.

Through camera calibration, it is identified for each camera, intrinsic parameters (such as, for example, focal length, scale factors, distortion coefficients, etc.) and extrinsic parameters (such as, for example, camera position and orientation with respect to the world coordinate system), or a subset of these under a given camera model such as the pinhole camera model. Determining intrinsic and extrinsic parameters may involve taking pictures in different angles of specially prepared objects with known dimensions and whose coordinates in the real world are precisely known as well, from e.g. prior measurements. For example, document (10) US 7023473 B (SONY CORP) 04/04/2006 discloses a calibration method which requires a calibration object with known features and several stereo-images of the know object shot under various angles.

However, this type of calibration technique requires precise initial calibration measurements and is not well suited for applications in uncontrolled environments where, for example, camera parameters may be subject to drift, due to shocks or vibrations, such as those experienced in a day to day basis by handled devices comprising a stereoscopic camera such as smartphone or tablets. In contrast, it has been disclosed a method which do not use an initial guess, in document (30) **Christian Kurz, et al.** 2011. Bundle adjustment for stereoscopic 3D. In Proceedings of the 5th international conference on Computer vision/computer graphics collaboration techniques (MIRAGE'11), André Gagalowicz and Wilfried Philips (Eds.). Springer-Verlag, Berlin, Heidelberg, 1-12. Namely, the method of document (30) performs bundle adjustment for a stereo camera calibration by using the updated calibration for further minimisation. However, such method cannot ensure that the provided results would not converge to an odd camera calibration estimate which may be numerically sound but not physically relevant.

**Summary of invention**

Thus, an objective of the proposed solution is to overcome the above problem by performing an automatic calibration with at least one natural stereo-image without the need of special or known objects.

A first aspect of the proposed solution relates to an apparatus for calibrating a stereoscopic camera, the apparatus comprising :

- a processing unit configured to support at least a first triangulation unit, a second triangulation unit and a Bundle Adjustment unit, with respect to at least one stereo-image of the stereoscopic camera, wherein:
- the first triangulation unit and second triangulation unit are coupled to the Bundle Adjustment unit;
- the first triangulation unit is configured to generate a first plurality of 3D object-point coordinates estimates (E3D) based on at least a plurality of measured 2D image-point correspondences (PCO) of the stereo-image and an initial calibration estimate (CAE) of the stereoscopic camera;

- the first triangulation unit is further configured to generate a first reprojection error (RPE1) corresponding to the error between the PCO and a projection of the E3D on the CAE;
- the Bundle Adjustment unit is configured to generate a refined calibration estimate (RCA) of the stereoscopic camera based on at least the PCO, the CAE and the E3D;

- the second triangulation unit is configured to generate a second plurality of 3D object-point coordinates estimates (NE3D) based on at least the PCO and the RCA;
- the second triangulation unit is further configured to generate a second reprojection error (RPE2) corresponding to the error between the PCO and a projection of the NE3D on the RCA;
- the Bundle Adjustment unit is further configured to generate the refined calibration estimate (RCA) of the stereoscopic camera based on at least the PCO, the CAE and the NE3D; and,
- the processing unit is further configured to determine a convergence criterion based on at least the RPE2 by iteratively generating the RCA and the RPE2, the convergence criterion being indicative of whether or not a camera calibration ground-truth has been found.

A second aspect relates to a device comprising:

- a stereoscopic camera;
- a stereoscopic image acquisition unit configured to acquire at least one stereo-image and coupled to the stereoscopic camera; and,
- an apparatus as defined in the first aspect coupled to the stereoscopic image acquisition unit and configured to calibrate the stereoscopic camera based on the at least one stereo-image.

A third aspect relates to a device comprising:

- a stereoscopic camera
- a stereoscopic image acquisition unit configured to acquire at least one stereo-image and coupled to the stereoscopic camera;
- a storage unit configured to store the at least one stereo-image and coupled to the stereoscopic image acquisition unit; and,
- an apparatus as defined in the first aspect coupled to the storage unit and configured to calibrate the stereoscopic camera based on the at least one stereo-image.

A fourth aspect relates to a method of calibrating a stereoscopic camera, the method comprising, with respect to at least one stereo-image of the stereoscopic camera:

- generating a first plurality of 3D object-point coordinates estimates (E3D) based on at least a plurality of measured 2D image-point correspondences (PCO) of the stereo-image and an initial calibration estimate (CAE) of the stereoscopic camera;
- generating a first reprojection error (RPE1) corresponding to the error between the PCO and a projection of the E3D on the CAE;
- generating a refined calibration estimate (RCA) of the stereoscopic camera based on at least the PCO, the CAE and the E3D;
- generating a second plurality of 3D object-point coordinates estimates (NE3D) based on at least the PCO and the RCA;
- further generating a second reprojection error (RPE2) corresponding to the error between the PCO and a projection of the NE3D on the RCA;
- further generating a refined calibration estimate (RCA) of the stereoscopic camera based on at least the PCO, the CAE and the NE3D; and,

wherein a convergence criterion is determined based on at least RPE2 by iteratively generating the RCA and the RPE2, the convergence criterion being indicative of whether or not a camera calibration ground-truth has been found.

A fifth aspect relates to a computer program product stored in a non-transitory computer-readable storage medium that stores computer-executable code for calibrating a stereoscopic camera, the computer-executable process causing a processor of the computer to perform the method according to fourth aspect.

Thus in a device embodying the principles of such mechanism, it is it possible to perform camera calibration without the need of precise initial calibration measurements and also without the need of a controlled environment. This result is achieved by iterating the determination of camera calibration estimates until proposer solution is found.

The one with ordinary skills in the art should note also that the proposed solution may work with one stereo-image thus making it easy to implement and cost effective.

This is in contrast with prior art solutions wherein, for example, at least two different stereo-images may be needed as already explained above.

In an embodiment, the initial calibration estimate is a coarse estimate of the camera calibration ground-truth.

In one embodiment, the initial calibration estimate is derived from physical specifications of the stereoscopic camera.

In another embodiment, the convergence criterion is fulfilled when the following formula apply:

$$RPE2 + \varepsilon > RPE1$$

where:

- $\varepsilon$ is a positive number.

In yet another embodiment, the convergence criterion is fulfilled when the following formula apply:

$$RPE2_{current} + \varepsilon > RPE2_{previous}$$

where:

- $\varepsilon$ is a positive number;
- $RPE2_{current}$ is the RPE2 of the current iteration; and,
- $RPE2_{previous}$ is the RPE2 of the iteration preceding the current iteration.

Possibly, the number $\varepsilon$ is in the range of $1e^{-3}$ to $1e^{-1}$.

In one embodiment, the convergence criterion is fulfilled after a given number of iterations have been performed.

Possibly, the convergence criterion is fulfilled when the following formula apply:

$$RPE2_{current} \prec RPE2_{th}$$

where:

- $RPE2_{current}$ is the RPE2 of the current iteration; and,
- $RPE2_{th}$ is a predetermined reprojection error.

**Brief description of drawings**

A more complete understanding of the proposed solution may be obtained from a consideration of the following description in conjunction with the appended drawings, in which like reference numbers indicate the same or similar element and in which:

FIG. 1 is a block diagram illustrating a prior art apparatus for calibrating a camera.
FIG. 2 is a block diagram illustrating an embodiment of an apparatus for calibrating a camera according to the proposed solution.
FIG. 3 is a flow diagram illustrating an embodiment of a method of calibrating a camera used by the apparatus of FIG. 2.
FIG. 4 is a block diagram illustrating an embodiment of the apparatus of FIG. 2 in a device according to the proposed solution.
FIG. 5 is a block diagram illustrating another embodiment of the apparatus of FIG. 2 in a device according to the proposed solution.

**Description of embodiments**

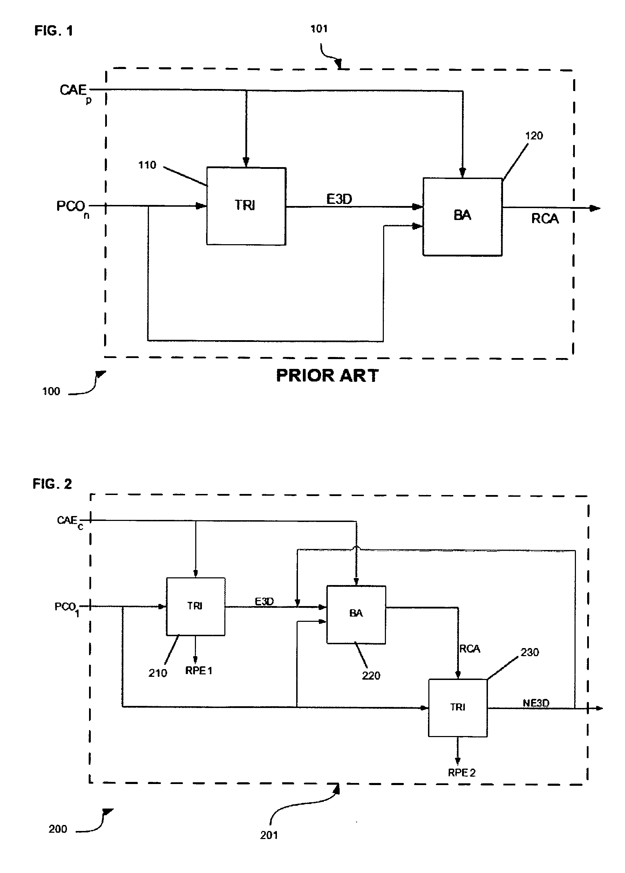

Referring now to FIG. 1, there is shown therein a block diagram schematically illustrating a prior art apparatus 100 for calibrating a camera. The prior art apparatus 100 as shown comprises a processing unit 101 such as a processor and adapted to support a triangulation (TRI) unit 110 and a Bundle Adjustment (BA) unit 120 that are coupled together. The prior art apparatus 100 may be coupled to a camera (not shown) such as a stereoscopic camera and may have access to a plurality of stereo-images (not shown) taken by the camera.

Referring to FIG. 1, the TRI unit 110 is configured to implement a triangulation technique and the BA unit 120 is configured to implement a Bundle Adjustment technique, both techniques being well known techniques in computer vision community so that no detailed description thereof will be provided here.

The TRI unit 110 may also be configured to determine a first estimate of 3D object-points coordinates (E3D) based on at least:

- a plurality of measured 2D image-point correspondences ($PCO_n$) with respect to the plurality of stereo-images; and,
- an initial precise version of intrinsic and extrinsic parameters of the camera thereinafter referred to as initial precise calibration estimate (CAEp).

The $PCO_n$ may correspond to the projections of real world object-points on the left and right images of each of the plurality stereo-images. The $PCO_n$ may be obtained using correspondence search methods such as Area-based methods or feature-based methods such as feature matching, block matching or optical flow.

The $CAE_p$ may be obtained by accurate measurements performed on the camera. Measurements could have been performed with conventional calibration methods such as using calibration patterns, manual setup or offline computing means, for example.

Referring back to FIG. 1, the BA unit 120 may also be configured to determine a refined calibration estimate (RCA) of the camera based on at least the $PCO_n$, the $CAE_p$ and the E3D. For example, methods such as Levenberg-Marquardt or gradient decent may be used for such purpose.

One drawback of the prior art apparatus 100 is the fact that the BA unit 120 performs well only with an estimate of the camera calibration which is hard to obtain since it needs to be very precise. In fact, the $CAE_p$ used in the BA unit 120 needs to be quite close to the camera calibration ground-truth, i.e. the real world camera features of the camera used to acquire the plurality of stereo-images.

Improvements over the prior art apparatus 100 may be found, for example, in document (20) DANG, Thao, et al. Continuous stereo self-calibration by camera parameter tracking. IEEE Transactions on Image Processing. July 2009, vol.18, no.7, p.1536-1550., wherein the BA unit 120 is recursively applied on a plurality of stereo-images in order to further improve the refinement of an initial coarse calibration estimate ($CAE_c$) which is an initial guess of the calibration estimate and therefore less precise than the $CAE_p$. Additionally, in document (20), a trifocal constraint also known as trilinear constraint is used on the $PCO_n$, meaning that it is required that a correspondence search is performed on at least three images. Namely, a point of the E3D utilising the left and right images of a stereo-image should triangulate to the same point in the E3D when a third image is taken into consideration. One drawback of trifocal constraint is that it is complex to implement and requires a lot of processing time. Another drawback is the fact that it is required to acquire at least three images.

The above drawbacks may be overcome to some extent by embodiments of the proposed solution, by taking into account at least one stereo-image for improving the refinement of the $CAE_c$. According to the proposed solution, the at least one stereo-image may be a natural stereo-image wherein no special object with particular characteristics need to present therein.

Referring now to FIG. 2, there is shown therein an embodiment of an apparatus 200 for calibrating a camera according to the proposed solution. The apparatus 200 as shown comprises a processing unit 201 such as a processor and adapted to support a first TRI unit 210, a BA unit 220 and a second triangulation unit (TRI) 230 wherein the first TRI unit 210 and the second TRI unit 230 are both coupled to the BA unit 210.

The apparatus 200 may be coupled to the camera (not shown) such as a stereoscopic camera and may have access to at least one stereo-image (not shown) taken by the camera.

Referring to FIG. 2, the first TRI unit 210 may be configured to determine a first estimate of 3D object-points coordinates (E3D) based on at least:

- a plurality of measured 2D image-point correspondences ($PCO_1$) with respect to the at least one stereo-image; and,
- an initial coarse version of intrinsic and extrinsic parameters of the camera thereinafter referred to as initial coarse calibration estimate (CAEc).

The $PCO_1$ may correspond to the projections of real world object-points on the left and right images of the at least one stereo-image. The $PCO_1$ may be obtained using methods as described above regarding the $PCO_n$.

The $CAE_c$ may be a coarse estimate of the camera calibration ground-truth instead of being a precise estimate as it was necessary the case in the prior art regarding $CAE_p$.

For example, the $CAE_c$ may be deduced from the specifications of the camera.

For example, the principal point coordinates of the camera may be assumed to be in the middle of the sensor. Possibly, the skew factor may be assumed to be equal to 0 as it is the case for most of the modern sensors. Additionally, the parallel lens axis setup in which cameras of a stereoscopic camera are aligned on X and Y axis may be equal to a rigid transformation $(R,t)$, where $t=(-b,0,0)$ and $R = \begin{bmatrix} 1 & 0 & 0 \\ 0 & 1 & 0 \\ 0 & 0 & 1 \end{bmatrix}$ is the 3x3 identity matrix and $b$ is the distance between the two camera axis also referred to as the baseline.

Referring back to FIG. 2, the first TRI unit 210 may also be configured to determine a reprojection error (RPE1) corresponding to the error between the $PCO_1$ and a projection of the E3D on the $CAE_c$. For example, the RPE1 may be equal to the average Euclidian distance between the points in the $PCO_1$ and the projection of their corresponding triangulated points in the E3D on the $CAE_c$.

The BA unit 220 may also be configured to determine a refined calibration estimate (RCA) of the camera based on at least the $PCO_1$, the $CAE_c$ and the E3D using, for example, methods as described above.

The second TRI unit 230 may be configured to determine a second estimate of 3D object-points coordinates (NE3D) based on at least the $PCO_1$ and the RCA using, for example triangulation techniques as described above.

The second TRI unit 230 may also be configured to determine a second reprojection error (RPE2) corresponding to the error between the $PCO_1$ and a projection of the NE3D on the RCA. For example, RPE2 may be equal to the average Euclidian distance between the points in the $PCO_1$ and the projection of their corresponding triangulated points in the NE3D on the RCA.

The BA unit 220 may also be configured to determine again the refined calibration estimate (RCA) of the camera based on at least the $PCO_1$, the $CAE_c$ and the NE3D using, for example, methods as described above.

The one with ordinary skills in the art should note that using the RCA to triangulate the E3D based on the $PCO_1$, allows obtaining the NE3D which is a more accurate estimate of the real world 3D object-points coordinates than the E3D.

The proposed solution is based on the idea that by iterating the determination of the RPE2 and the RCA, it is possible for the iterated RCA to converge towards the camera calibration ground-truth. For example, the operations of the BA unit 220 and the operations of the second TRI unit 230 may be iterated to achieve such a goal wherein each iterations starts with different initial parameters that become more and more close to their true value. Another important idea of the proposed solution, is the fact the $CAE_c$ is used in the determination of the current RCA instead of the RCA determined in the preceding iteration which is however available. In fact, it has been found that this choice would ensure that the iterated RCA would not converge to an odd camera calibration estimate that may be numerically sound but not physically relevant.

According to the proposed solution, the iteration process may be stopped based on a monitoring of the RPE2 for example at the output of the second TRI unit 230. Namely, as long as the RPE2 significantly decreases in consecutive iterations, then the process continues to be iterated. However, if the RPE2 suddenly increases, or simply does not decrease significantly, then the process is stopped.

Possibly, the iteration process may be stopped when a given convergence criterion is fulfilled.

In one embodiment, the convergence criterion may be fulfilled when the following formula apply:

$$RPE2 + \varepsilon > RPE1 \qquad (3)$$

where:

- $\varepsilon$ is a positive variation number.

The above embodiment may be directed to the first iteration such that when the first RPE2 is available it can be compared to RPE1.

In another embodiment, the convergence criterion may be fulfilled when the following formula apply:

$$RPE2_{current} + \varepsilon > RPE2_{previous} \qquad (4)$$

where:

- $\varepsilon$ is the positive variation number;
- $RPE_{2current}$ is the RPE2 of the current iteration; and,
- $RPE2_{previous}$ is the RPE2 of the iteration preceding the current iteration.

The above embodiment may be directed to the subsequent iterations such that when the current RPE2 is available it can be compared to RPE2 determined in the iteration preceding the current iteration.

According to the proposed solution, the variation number $\varepsilon$ may be in the range of range of $1e^{-3}$ to $1e^{-1}$. However, other ranges may be possible depending on the required application or the required degree of accuracy.

Namely, the variation number $\varepsilon$ indicates whether the variation of the current RPE2 compared to the RPE1 or the RPE2 of the iteration preceding the current iteration is small enough in order for the iteration process to be stopped, meaning that it is considered that no variation has occurred between two subsequent iterations. Therefore $\varepsilon$ also indicates that when the variation is large the iteration should continue to the subsequent iteration.

In other words, the iteration process would stop when a small decrease of the current RPE2 compared to the RPE1 or the RPE2 of the iteration preceding the current iteration is observed.

Alternatively, the iteration process would also stop when an increase of the current RPE2 compared to the RPE1 or the RPE2 of the iteration preceding the current iteration is observed.

Another possibility may consist in stopping the iteration after a given number of iterations have been performed. In that case, for example, the convergence criterion may be fulfilled when the following formula apply:

$$RPE2_{current} \prec RPE2_{th} \qquad (5)$$

where:

- $RPE2_{current}$ is the RPE2 of the current iteration; and,
- $RPE2_{th}$ is a predetermined reprojection error.

In accordance with this embodiment the current RPE2 may be compared to a predetermined reprojection error $RPE2_{th}$ corresponding to a desired reprojection error assessing the quality of the camera calibration process. For example, the predetermined reprojection error $RPE2_{th}$ may have been obtained based on laboratory measurements or may be based on experience.

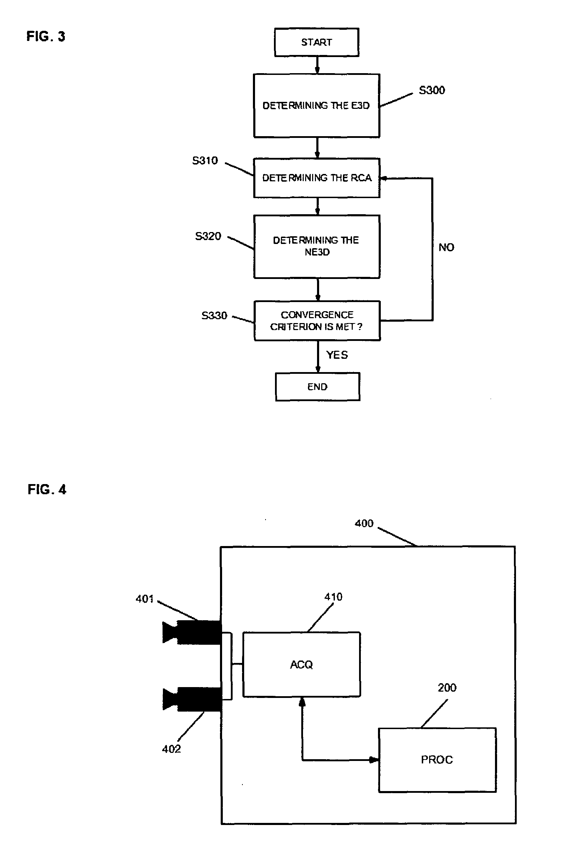

Thereinafter, reference will be made to FIG. 3, which is illustrating an embodiment of a method of calibrating a camera used by the apparatus 200 of FIG. 2.

In S300, it is determined the E3D with respect to at least one stereo-image, for example using the first TRI unit 210. As explained above, the RPE1 may also be determined at this stage.

In S310, it is determined the RCA with respect to the at least one stereo-image, for example using the BA unit 220.

In S320, it is determined the NE3D with respect to the at least one stereo-image, for example using the second TRI unit 230. As explained above, the RPE2 may also be determined at this stage.

In S330, it is determined whether the convergence criterion is fulfilled, for example by monitoring the RPE2. In the first iteration, the convergence criterion may be determined by using, for example, the formula (3). In the subsequent iterations, the convergence criterion may be determined by using, for example, the formula (4). However, as explained above, the method could also be stopped after a given number of iterations have been performed and/or when the convergence criterion based on the formula (5) is fulfilled.

Thus, until an acceptable RCA is found, the method would iterate through S310, S320 and S330.

The proposed solution may also be implemented in a computer program product stored in a non-transitory computer-readable storage medium that stores computer-executable code which causes a processor computer to perform a method according to the proposed solution. For example, the above program product may be embodied in a device comprising a stereoscopic camera and run during the manufacturing phase of the device such that the stereoscopic camera is calibrated as soon as a customer buys it. The program product may also be run directly by a user of the device, where for example in a GUI it would be asked to either take a stereo-image or select a previously recorded one and then a point correspondence search could be performed on the stereo-image prior the application of the method on the stereo-image. The point correspondence search could be automatically performed on each stereo-image taken or previously stored on the device. This operation that could be quite resource intensive could be performed as a background task or with a low priority such that it is not perceivable by the user, for example while the device is plugged on a charging socket. In one embodiment, the program product could be run when the device has detected that it has been subject to a mechanical shock such as a drop of the device on the floor.

Referring now to FIG. 4, there is shown therein a block diagram schematically illustrating an embodiment of the apparatus 200 of FIG. 2 in a device 400 according to the proposed solution. The device 400 as shown comprises a stereoscopic camera 401, 402, a stereoscopic image acquisition unit 410 and the apparatus 200. The stereoscopic image acquisition unit 410 is coupled to the stereoscopic camera 401, 402 and is configured to acquire at least one stereo-image using the stereoscopic camera 401, 402. The stereoscopic image acquisition unit 410 is also coupled to the apparatus 200 and is also configured to provide the at least one stereo-image to the apparatus 200 wherein the apparatus 200 is configured to calibrate the stereoscopic camera 401, 402 based on the at least one stereo-image.

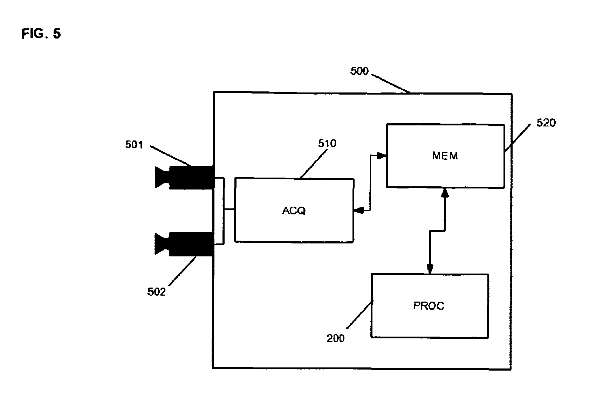

Referring now to FIG. 5, there is shown therein a block diagram schematically illustrating an embodiment of the apparatus 200 of FIG. 2 in a device 500 according to the proposed solution. The device 500 as shown comprises a stereoscopic camera 501, 502, a stereoscopic image acquisition unit 510, a storage unit 520 and the apparatus 200. The stereoscopic image acquisition unit 510 is coupled to the stereoscopic camera 501, 502 and is configured to acquire at least one stereo-image using the stereoscopic camera 501, 502. The stereoscopic image acquisition unit 510 is also coupled to the storage unit 520 and is also configured to provide the at least one stereo-image to the storage unit 520. The storage unit 520 is coupled to the apparatus 200 and is configured to store at least one stereo-image provided by the stereoscopic image acquisition unit 510. Additionally, the storage unit 520 is also configured to provide the at least one stereo-image to the apparatus 200 wherein the apparatus is configured to calibrate the stereoscopic camera based on the at least one stereo-image.

The device 400, 500 may be handheld devices, portable devices, wireless devices, non-wireless devices, smartphone or a tablets, for example.

Although the description has been presented mainly based on one stereo-image, a plurality of stereo-images or an entire video may be considered as well. The stereo-images may be natural images but non-natural images such as those comprising special objects to help calibration cameras may be considered as well. Additionally, for example, the triangulation units may be comprised in the same unit.

Of course, the above advantages are exemplary, and these or other advantages may be achieved by the proposed solution. Further, the skilled person will appreciate that not all advantages stated above are necessarily achieved by embodiments described herein.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Reference list

[076] Document (10): US 7023473 B (SONY CORP) 04.04.2006.

[077] Document (20): DANG, Thao, et al. Continuous stereo self-calibration by camera parameter tracking. IEEE Transactions on Image Processing. July 2009, vol. 18, no.7, p.1536-1550

[078] document (30) Christian Kurz, et al. 2011. Bundle adjustment for stereoscopic 3D. In Proceedings of the 5th international conference on Computer vision/computer graphics collaboration techniques (MIRAGE'11), André Gagalowicz and Wilfried Philips (Eds.). Springer-Verlag, Berlin, Heidelberg, 1-12.

## Claims

**1.** An apparatus (200) for calibrating a stereoscopic camera (401, 402, 501, 502), the apparatus comprising :

> - a processing unit (201) configured to support at least a first triangulation unit (210), a second triangulation unit (230) and a Bundle Adjustment unit (220), with respect to at least one stereo-image of the stereoscopic camera, wherein:
> - the first triangulation unit and second triangulation unit are coupled to the Bundle Adjustment unit;
> - the first triangulation unit is configured to generate a first plurality of 3D object-point coordinates estimates, E3D, based on at least a plurality of measured 2D image-point correspondences, PCO, of the stereo-image and an initial calibration estimate, CAE, of the stereoscopic camera;
> - the first triangulation unit is further configured to generate a first reprojection error, RPE1, corresponding to the error between the PCO and a projection of the E3D on the CAE;

- the Bundle Adjustment unit is configured to generate a refined calibration estimate, RCA, of the stereoscopic camera based on at least the PCO, the CAE and the E3D;
- the second triangulation unit is configured to generate a second plurality of 3D object-point coordinates estimates, NE3D, based on at least the PCO and the RCA;
- the second triangulation unit is further configured to generate a second reprojection error, RPE2, corresponding to the error between the PCO and a projection of the NE3D on the RCA;
- the Bundle Adjustment unit is further configured to generate the refined calibration estimate, RCA, of the stereoscopic camera based on at least the PCO, the CAE and the NE3D; and,
- the processing unit is further configured to determine a convergence criterion based on at least the RPE2 by iteratively generating the RCA and the RPE2, the convergence criterion being indicative of whether or not a camera calibration ground-truth has been found.

2. The apparatus of claim 1, wherein the initial calibration estimate is a coarse estimate of the camera calibration ground-truth.

3. The apparatus of claim 2, wherein the initial calibration estimate is derived from physical specifications of the stereoscopic camera.

4. The apparatus of any one of claims 1 to 3, wherein the convergence criterion is fulfilled when the following formula apply:

$$RPE2 + \varepsilon > RPE1$$

where:

- $\varepsilon$ is a positive number.

5. The apparatus of any one of claims 1 to 3, wherein the convergence criterion is fulfilled when the following formula apply:

$$RPE2_{current} + \varepsilon > RPE2_{previous}$$

where:

- $\varepsilon$ is a positive number;
- $RPE2_{current}$ is the RPE2 of the current iteration; and,
- $RPE2_{previous}$ is the RPE2 of the iteration preceding the current iteration.

6. The apparatus of any one of claims 1 to 5, wherein the convergence criterion is fulfilled after a given number of iterations have been performed.

7. The apparatus of claim 6, wherein the convergence criterion is fulfilled when the following formula apply:

$$RPE2_{current} \prec RPE2_{th}$$

where:

- $RPE2_{current}$ is the RPE2 of the current iteration; and,
- $RPE2_{th}$ is a predetermined reprojection error.

8. A device comprising:

- a stereoscopic camera (401, 402);
- a stereoscopic image acquisition unit (410) configured to acquire at least one stereo-image and coupled to the stereoscopic camera; and,
- an apparatus (200) as defined in any one of claims 1 to 7 coupled to the stereoscopic image acquisition unit and configured to calibrate the stereoscopic camera based on the at least one stereo-image.

9. A device comprising:

- a stereoscopic camera (501, 502);
- a stereoscopic image acquisition unit (510) configured to acquire at least one stereo-image and coupled to the stereoscopic camera;
- a storage unit (520) configured to store the at least one stereo-image and coupled to the stereoscopic image acquisition unit; and,
- an apparatus (200) as defined in any one of claims 1 to 7 coupled to the storage unit and configured to calibrate the stereoscopic camera based on the at least one stereo-image.

10. A method of calibrating a stereoscopic camera (401, 402, 501, 502), the method comprising, with respect to at least one stereo-image of the stereoscopic camera:

- generating a first plurality of 3D object-point coordinates estimates, E3D, (210) based on at least a plurality of measured 2D image-point correspondences, PCO, of the stereo-image and an initial calibration estimate, CAE, of the stereoscopic camera;
- generating a first reprojection error, RPE1, corresponding to the error between the PCO and a projection of the E3D on the CAE;
- generating a refined calibration estimate, RCA, of the stereoscopic camera (220) based on at least the PCO, the CAE and the E3D;
- generating a second plurality of 3D object-point coordinates estimates, NE3D, (230) based on at least the PCO and the RCA
- further generating a second reprojection error, RPE2, corresponding to the error between the PCO and a projection of the NE3D on the RCA;
- further generating a refined calibration estimate, RCA, of the stereoscopic camera based on at least the PCO, the CAE and the NE3D; and,

wherein a convergence criterion is determined based on at least RPE2 by iteratively generating the RCA and the RPE2, the value of RPE2 being indicative of whether or not a camera calibration ground-truth has been found.

11. The method of claim 10, wherein the initial calibration estimate is a coarse estimate of the camera calibration ground-truth.

12. The method of any one of claims 10 to 11, wherein the convergence criterion is fulfilled when the following formula apply:

$$RPE2 + \varepsilon > RPE1$$

where:

- $\varepsilon$ is a positive number.

13. The method of any one of claims 10 to 11, wherein the convergence criterion is fulfilled when the following formula apply:

$$RPE2_{current} + \varepsilon > RPE2_{previous}$$

where:

- ε is a positive number;
- $RPE2_{current}$ is the RPE2 of the current iteration; and,
- $RPE2_{previous}$ is the RPE2 of the iteration preceding the current iteration.

14. The method of any one of claims 10 to 13, wherein the convergence criterion is fulfilled after a given number of iterations have been performed.

15. The method of claim 14, wherein the convergence criterion is fulfilled when the following formula apply:

$$RPE2_{current} \prec RPE2_{th}$$

where:

- $RPE2_{current}$ is the RPE2 of the current iteration; and,
- $RPE2_{th}$ is a predetermined reprojection error.

16. A computer program product stored in a non-transitory computer-readable storage medium that stores computer-executable code for calibrating a stereoscopic camera, the computer-executable process causing a processor of the computer to perform the method according to any one of claims 10 to 15.

17. The computer program product of claim 16 wherein the computer-executable process causes the processor of the computer to perform the method according to any one of claims 10 to 15 when the computer has detected that it has been subject to at least one mechanical shock.


**Patentansprüche**

1. Vorrichtung (200) zum Kalibrieren einer stereoskopischen Kamera (401, 402, 501, 502) mit:

- einer Verarbeitungseinheit (201), die zum Unterstützen mindestens einer ersten Triangulationseinheit (210), einer zweiten Triangulationseinheit (230) und einer Bündeleinstellungseinheit (220) eingerichtet ist, mit Bezug auf wenigstens ein Stereobild der stereoskopischen Kamera, wobei:
- die erste Triangulationseinheit und die zweite Triangulationseinheit an die Bündeleinstellungseinheit gekoppelt sind;
- die erste Triangulationseinheit ist zum Generieren einer ersten Vielzahl von Abschätzungen für 3D-Objektpunktkoordinaten, E3D, eingerichtet basierend wenigstens auf einer Vielzahl von gemessenen 2D-Bildpunktentsprechungen, PCO, des Stereobilds und einer ursprünglichen Kalibrierungsschätzung, CAE, der stereoskopischen Kamera;
- die erste Triangulationseinheit weiter zum Generieren eines ersten Rückprojektionsfehlers, RPE1, entsprechend dem Fehler zwischen der PCO und einer Projektion der E3D auf die CAE eingerichtet ist;
- die Bündeleinstellungseinheit ist zum Generieren einer verfeinerten Kalibrierungsschätzung, RCA, der stereoskopischen Kamera eingerichtet basierend wenigstens auf der PCO, der CAE und der E3D;
- die zweite Triangulationseinheit ist eingerichtet zum Generieren einer zweiten Vielzahl von Schätzungen für 3D-Objektpunktkoordinaten, NE3D, basierend wenigstens auf der PCO und der RCA;
- die zweite Triangulationseinheit ist weiter eingerichtet zum Generieren eines zweiten Rückprojektionsfehlers, RPE2, entsprechend dem Fehler zwischen der PCO und einer Projektion des NE3D auf die RCA;
- die Bündeleinstellungseinheit ist weiter eingerichtet zum Generieren der verfeinerten Kalibrierungsschätzung RCA, der stereoskopischen Kamera basierend wenigstens auf der PCO, der CAE und der NE3D; und
- die Verarbeitungseinheit ist weiter eingerichtet zum Bestimmen eines Konvergenzkriteriums basierend wenigstens auf der RPE2 durch iteratives Generieren der RCA und der RPE2, wobei das Konvergenzkriterium anzeigt, ob eine Kamerakalibrierungsbodenwahrheit gefunden wurde oder nicht.

2. Vorrichtung nach Anspruch 1, wobei die ursprüngliche Kalibrierungsschätzung eine grobe Schätzung der Kamerakalibrierungsbodenwahrheit ist.

3. Vorrichtung nach Anspruch 2, wobei die ursprüngliche Kalibrierungsschätzung abgeleitet wird von physikalischen Spezifikationen der stereoskopischen Kamera.

4. Vorrichtung nach einem der Ansprüche 1 bis 3, wobei das Konvergenzkriterium erfüllt ist, wenn die folgende Formel gilt:

$$RPE2 + \varepsilon > RPE1$$

wobei:

$\varepsilon$ ist eine positive Zahl.

5. Vorrichtung nach einem der Ansprüche 1 bis 3, wobei das Konvergenzkriterium erfüllt ist, wenn die folgende Formel gilt:

$$RPE2_{aktuell} + \varepsilon > RPE2_{vorher}$$

wobei:

- $\varepsilon$ ist eine positive Zahl;
- $RPE2_{aktuell}$ ist die RPE2 der aktuellen Iteration; und
- $RPE2_{vorher}$ ist die RPE2 der der aktuellen Iteration vorhergehenden Iteration.

6. Vorrichtung nach einem der Ansprüche 1 bis 6, wobei das Konvergenzkriterium erfüllt ist nachdem eine gegebene Anzahl von Iterationen ausgeführt wurde.

7. Vorrichtung nach Anspruch 6, wobei das Konvergenzkriterium erfüllt ist, wenn die folgende Formel gilt:

$$RPE2_{aktuell} < RPE2_{th}$$

wobei:

- $RPE2_{aktuell}$ ist die RPE2 der aktuellen Iteration; und
- $RPE2_{th}$ ist ein vorbestimmter Rückprojektionsfehler.

8. Vorrichtung mit:

- einer stereoskopischen Kamera für (401, 402);
- einer stereoskopischen Bildaufnahmeeinheit (410), die zum Aufnehmen wenigstens eines Stereobilds eingerichtet und mit der stereoskopischen Kamera gekoppelt ist; und
- einer Vorrichtung (200) nach einem der Ansprüche 1 bis 7, die mit der stereoskopischen Bildaufnahmeeinheit gekoppelt und dazu eingerichtet ist, die stereoskopische Kamera basierend auf dem wenigstens einen Stereobild zu kalibrieren.

9. Vorrichtung mit:

- einer stereoskopischen Kamera (501, 502);
- einer stereoskopischen Bildaufnahmeeinheit (510), die zum Aufnehmen wenigstens eines Stereobilds eingerichtet und mit der stereoskopischen Kamera gekoppelt ist;
- einer Speichereinheit (520), die eingerichtet ist zum Speichern wenigstens eines Stereobilds und mit der stereoskopischen Bildaufnahmeeinheit gekoppelt ist; und
- einer Vorrichtung (200) nach einem der Ansprüche 1 bis 7, die mit der Speichereinheit gekoppelt und dazu eingerichtet ist, die stereoskopische Kamera basierend auf dem wenigstens einen Stereobild zu kalibrieren.

**10.** Verfahren zum Kalibrieren einer stereoskopischen Kamera (401, 402, 501, 502), wobei das Verfahren mit Bezug auf wenigstens ein Stereobild der stereoskopischen Kamera umfasst:

- Generieren einer ersten Vielzahl von Schätzungen von 3D Objektpunktkoordinaten, E3D, (210) basierend wenigstens auf einer Vielzahl von gemessenen 2D Bildpunktentsprechungen, PCO, des Stereobilds und einer ursprünglichen Kalibrierungsschätzung, CAE, der stereoskopischen Kamera;
- Generieren eines ersten Rückprojektionsfehlers, RPE1, entsprechend dem Fehler zwischen der PCO und einer Projektion der E3D auf die CAE;
- Generieren einer verfeinerten Kalibrierungsschätzung, RCA, der stereoskopischen Kamera (220) basierend wenigstens auf der PCO, der CAE und der E3D;
- Generieren einer zweiten Vielzahl von Schätzungen von 3D Objektpunktkoordinaten, NE3D, (230) basierend wenigstens auf der PCO und der RCA
- weiter Generieren eines zweiten Rückprojektionsfehlers, RPE2, entsprechend dem Fehler zwischen der PCO und einer Projektion der NE3D auf die RCA;
- weiter Generieren einer verbesserten Kalibrierungsschätzung, RCA, der stereoskopischen Kamera basierend wenigstens auf der PCO, der CAE und der NE3D; und
- wobei ein Konvergenzkriterium bestimmt wird basierend wenigstens auf RPE2 durch iteratives Generieren der RCA und der RPE2, wobei der Wert von RPE2 anzeigt, ob eine Kamerakalibrierungsbodenwahrheit gefunden wurde oder nicht.

**11.** Verfahren nach Anspruch 10, wobei die ursprüngliche Kalibrierungsschätzung eine grobe Schätzung der Kamerakalibrierungsbodenwahrheit ist.

**12.** Verfahren nach einem der Ansprüche 10 oder 11, wobei das Konvergenzkriterium erfüllt ist, wenn die folgende Formel gilt:

$$RPE2 + \varepsilon > RPE1$$

wobei:

- $\varepsilon$ ist eine positive Zahl.

**13.** Verfahren nach einem der Ansprüche 10 bis 11, wobei das Konvergenzkriterium erfüllt ist, wenn die folgende Formel gilt:

$$RPE2_{aktuell} + \varepsilon > RPE2_{vorher}$$

wobei:

- $\varepsilon$ ist eine positive Zahl;
- $RPE2_{aktuell}$ ist die RPE2 der aktuellen Iteration; und
- $RPE2_{vorher}$ ist die RPE2 der der aktuellen Iteration vorhergehenden Iteration.

**14.** Verfahren nach einem der Ansprüche 10 bis 13, wobei das Konvergenzkriterium erfüllt ist nachdem eine gegebene Anzahl von Iterationen ausgeführt wurde.

**15.** Verfahren nach Anspruch 14, wobei das Konvergenzkriterium erfüllt ist, wenn die folgende Formel gilt:

$$RPE2_{aktuell} < RPE2_{th}$$

WO:

- $RPE2_{aktuell}$ ist die RPE2 der aktuellen Iteration; und
- $RPE2_{th}$ ist ein vorbestimmter Rückprojektionsfehler.

16. Computerprogrammprodukt, welches gespeichert ist in einem nicht-flüchtigen computerlesbaren Speichermedium, welcher von einem Computer ausführbaren Code zum Kalibrieren einer stereoskopischen Kamera speichert, wobei der mit dem Computer ausführbare Prozess einen Prozessor des Computers veranlasst, das Verfahren nach einem der Ansprüche 10 bis 15 auszuführen.

17. Computerprogrammprodukt nach Anspruch 16, wobei der computerausführbare Prozess den Prozessor des Computers veranlasst, das Verfahren nach einem der Ansprüche 10 bis 15 auszuführen, wenn der Computer festgestellt hat, dass er wenigstens einen mechanischen Stoß unterworfen wurde.

## Revendications

1. Appareil (200) d'étalonnage d'une caméra stéréoscopique (401, 402, 501, 502), l'appareil comprenant :

   - une unité de traitement (201) configurée pour prendre en charge au moins une première unité de triangulation (210), une deuxième unité de triangulation (230) et une unité d'ajustement par faisceaux (220), par rapport à au moins une image stéréo de la caméra stéréoscopique, dans lequel :
   - la première unité de triangulation et la deuxième unité de triangulation sont couplées à l'unité d'ajustement par faisceaux ;
   - la première unité de triangulation est configurée pour générer une première pluralité d'estimations de coordonnées de points objets 3D, E3D, sur la base d'au moins une pluralité de correspondances de points images 2D mesurées, PCO, de l'image stéréo et d'une estimation d'étalonnage initiale, CAE, de la caméra stéréoscopique ;
   - la première unité de triangulation est en outre configurée pour générer une première erreur de re-projection, RPE1, correspondant à l'erreur entre la PCO et une projection de la E3D sur la CAE ;
   - l'unité d'ajustement par faisceaux est configurée pour générer une estimation d'étalonnage plus fine, RCA, de la caméra stéréoscopique sur la base d'au moins la PCO, la CAE et la E3D ;
   - la deuxième unité de triangulation est configurée pour générer une deuxième pluralité d'estimations de coordonnées de points objets 3D, NE3D, sur la base d'au moins la PCO et la RCA ;
   - la deuxième unité de triangulation est en outre configurée pour générer une deuxième erreur de re-projection, RPE2, correspondant à l'erreur entre la PCO et une projection de la NE3D sur la RCA ;
   - l'unité d'ajustement par faisceaux est en outre configurée pour générer l'estimation d'étalonnage plus fine, RCA, de la caméra stéréoscopique sur la base d'au moins la PCO, la CAE et la NE3D ; et
   - l'unité de traitement est en outre configurée pour déterminer un critère de convergence sur la base d'au moins la RPE2 par une génération itérative de la RCA et de la RPE2, le critère de convergence indiquant si une réalité de terrain d'étalonnage de la caméra a été trouvée ou non.

2. Appareil de la revendication 1, dans lequel l'estimation d'étalonnage initiale est une estimation grossière de la réalité de terrain d'étalonnage de la caméra.

3. Appareil de la revendication 2, dans lequel l'estimation d'étalonnage initiale est déduite de spécifications physiques de la caméra stéréoscopique.

4. Appareil de l'une quelconque des revendications 1 à 3, dans lequel le critère de convergence est satisfait lorsque la formule suivante est applicable :

$$RPE2 + \varepsilon > RPE1$$

dans laquelle :

   - $\varepsilon$ est un nombre positif.

5. Appareil de l'une quelconque des revendications 1 à 3, dans lequel le critère de convergence est satisfait lorsque la formule suivante est applicable :

$$RPE2_{courante} + \varepsilon > RPE2_{précédente}$$

dans laquelle :

- $\varepsilon$ est un nombre positif ;
- $RPE2_{courante}$ est la RPE2 de l'itération courante ; et
- $RPE2_{précédente}$ est la RPE2 de l'itération qui précède l'itération courante.

6. Appareil de l'une quelconque des revendications 1 à 5, dans lequel le critère de convergence est satisfait après qu'un nombre donné d'itérations a été effectué.

7. Appareil de la revendication 6, dans lequel le critère de convergence est satisfait lorsque la formule suivante est applicable :

$$RPE2_{courante} < RPE2_{ième}$$

dans laquelle :

- $RPE2_{courante}$ est la RPE2 de l'itération courante ; et
- $RPE2_{ième}$ est une erreur de re-projection prédéterminée.

8. Dispositif comprenant :

- une caméra stéréoscopique (401, 402) ;
- une unité d'acquisition d'image stéréoscopique (410) configurée pour acquérir au moins une image stéréo et couplée à la caméra stéréoscopique ; et
- un appareil (200) tel que défini dans l'une quelconque des revendications 1 à 7, couplé à l'unité d'acquisition d'image stéréoscopique et configuré pour étalonner la caméra stéréoscopique sur la base de la au moins une image stéréo.

9. Dispositif comprenant :

- une caméra stéréoscopique (501, 502) ;
- une unité d'acquisition d'image stéréoscopique (510) configurée pour acquérir au moins une image stéréo et couplée à la caméra stéréoscopique ;
- une unité de stockage (520) configurée pour stocker la au moins une image stéréo et couplée à l'unité d'acquisition d'image stéréoscopique ; et
- un appareil (200) tel que défini dans l'une quelconque des revendications 1 à 7, couplé à l'unité de stockage et configuré pour étalonner la caméra stéréoscopique sur la base de la au moins une image stéréo.

10. Procédé d'étalonnage d'une caméra stéréoscopique (401, 402, 501, 502), le procédé consistant, par rapport à au moins une image stéréo de la caméra stéréoscopique, à :

- générer une première pluralité d'estimations de coordonnées de points objets 3D, E3D, (210) sur la base d'au moins une pluralité de correspondances de points images 2D mesurées, PCO, de l'image stéréo et d'une estimation d'étalonnage initiale, CAE, de la caméra stéréoscopique ;
- générer une première erreur de re-projection, RPE1, correspondant à l'erreur entre la PCO et une projection de la E3D sur la CAE ;
- générer une estimation d'étalonnage plus fine, RCA, de la caméra stéréoscopique (220) sur la base d'au moins la PCO, la CAE et la E3D;
- générer une deuxième pluralité d'estimations de coordonnées de points objets 3D, NE3D, (230) sur la base d'au moins la PCO et la RCA;

- générer en outre une deuxième erreur de re-projection, RPE2, correspondant à l'erreur entre la PCO et une projection de la NE3D sur la RCA ;
- générer en outre une estimation d'étalonnage plus fine, RCA, de la caméra stéréoscopique sur la base d'au moins la PCO, la CAE et la NE3D ; et

selon lequel un critère de convergence est déterminé sur la base d'au moins la RPE2 par une génération itérative de la RCA et de la RPE2, la valeur de la RPE2 indiquant si une réalité de terrain d'étalonnage de la caméra a été trouvée ou non.

**11.** Procédé de la revendication 10, dans lequel l'estimation d'étalonnage initiale est une estimation grossière de la réalité de terrain d'étalonnage de la caméra.

**12.** Procédé de l'une quelconque des revendications 10 à 11, dans lequel le critère de convergence est satisfait lorsque la formule suivante est applicable :

$$RPE2 + \varepsilon > RPE1$$

dans laquelle :

- $\varepsilon$ est un nombre positif.

**13.** Procédé de l'une quelconque des revendications 10 à 11, dans lequel le critère de convergence est satisfait lorsque la formule suivante est applicable :

$$RPE2_{courante} + \varepsilon > RPE2_{précédente}$$

dans laquelle :

- $\varepsilon$ est un nombre positif ;
- $RPE2_{courante}$ est la RPE2 de l'itération courante ; et
- $RPE2_{précédente}$ est la RPE2 de l'itération qui précède l'itération courante.

**14.** Procédé de l'une quelconque des revendications 10 à 13, dans lequel le critère de convergence est satisfait après qu'un nombre donné d'itérations a été effectué.

**15.** Procédé de la revendication 14, dans lequel le critère de convergence est satisfait lorsque la formule suivante est applicable :

$$RPE2_{courante} < RPE2_{ième}$$

dans laquelle :

- $RPE2_{courante}$ est la RPE2 de l'itération courante ; et
- $RPE2_{ième}$ est une erreur de re-projection prédéterminée.

**16.** Produit programme d'ordinateur stocké sur un support de stockage non transitoire lisible par un ordinateur et qui stocke un code exécutable par ordinateur pour l'étalonnage d'une caméra stéréoscopique, le processus exécutable par ordinateur ayant pour effet qu'un processeur de l'ordinateur met en oeuvre le procédé selon l'une quelconque des revendications 10 à 15.

**17.** Produit programme d'ordinateur de la revendication 16, dans lequel le processus exécutable par un ordinateur a pour effet que le processeur de l'ordinateur met en oeuvre le procédé selon l'une quelconque des revendications 10 à 15 lorsque l'ordinateur a détecté qu'il a été soumis à au moins un choc mécanique.

**FIG. 1**

101

CAE$_p$

110

PCO$_n$ → TRI → E3D → BA → RCA

120

**PRIOR ART**

100

**FIG. 2**

CAE$_c$

PCO$_1$ → TRI → E3D → BA → RCA → TRI → NE3D

210   RPE1

220

230

RPE2

200

201

**FIG. 3**

```
                    ┌─────────┐
                    │  START  │
                    └────┬────┘
                         ↓
              ┌──────────────────────┐
              │ DETERMINING THE E3D  │──── S300
              └──────────┬───────────┘
                         ↓
   S310 ──── ┌──────────────────────┐
             │ DETERMINING THE RCA  │←─────────┐
             └──────────┬───────────┘          │
                        ↓                       │
   S320 ──── ┌──────────────────────┐          │
             │  DETERMINING THE     │          │ NO
             │       NE3D           │          │
             └──────────┬───────────┘          │
                        ↓                       │
   S330 ──── ┌──────────────────────┐          │
             │   CONVERGENCE        │──────────┘
             │  CRITERION IS MET ?  │
             └──────────┬───────────┘
                        ↓ YES
                  ┌─────────┐
                  │   END   │
                  └─────────┘
```

**FIG. 4**

**FIG. 5**

**EP 2 779 091 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7023473 B

**Non-patent literature cited in the description**

- **DANG, THAO et al.** Continuous stereo self-calibration by camera parameter tracking. *IEEE Transactions on Image Processing,* July 2009, vol. 18 (7), 1536-1550

- Bundle adjustment for stereoscopic 3D. **CHRISTIAN KURZ et al.** Proceedings of the 5th international conference on Computer vision/computer graphics collaboration techniques. Springer-Verlag, 2011, 1-12